# EUROPEAN PATENT APPLICATION

(11) **EP 4 836 244 A1**
(43) Date of publication of application: **04.11.2026**
(21) Application number: 24911363.0
(22) Date of filing: 26.12.2024
(51) Int. Cl.: H02K 1/20, H02K 9/19, H02K 1/16

(54) **OIL COOLING STRUCTURE FOR ELECTRIC MOTOR, ELECTRIC MOTOR, ELECTRIC DRIVING SYSTEM AND VEHICLE**

(30) Priority: 28.12.2023 CN 202311855445
(71) Applicant: Shanghai Lixiang Automobile Co., Ltd., Shanghai 201800 (CN)
(72) Inventor: ZENG, Jun, Shanghai 201800 (CN); XIE, Pengtao, Shanghai 201800 (CN); XU, Nannan, Shanghai 201800 (CN); XIA, Bingbing, Shanghai 201800 (CN); XIE, Xi, Shanghai 201800 (CN)
(74) Representative: 2SPL Patentanwälte PartG mbB
(86) International application number: PCT/CN2024/142849
(87) International publication number: WO 2025/140442

(57) **Abstract**

Provided in the embodiments of the present disclosure are an oil cooling structure for an electric motor, an electric motor, an electric driving system and a vehicle. The oil cooling structure for an electric motor comprises, arranged in the axis direction of an electric motor, an accumulator ring assembly and a plurality of bushings. The plurality of bushings are arranged in stator slots in a stator on an one-to-one basis; the bushings are used for accommodating windings in the stator slots corresponding to the bushings and forming first oil flow-through channels; the accumulator ring assembly is arranged coaxial with the electric motor and used for forming an oil cavity for accommodating portions of the windings extending out of the stator slots. In the oil cooling structure for an electric motor, providing the bushings can form in each stator slot the oil flow-through channels for directionally transferring cooling oil, and the bushings wrap the outer surfaces of the windings in the stator slots corresponding to the bushings, so as to directionally guide the flow of the cooling oil. Providing the accumulator ring assembly can not only form the oil cavity capable of cooling the end portions of the windings extending out of the stator slots, but also provide the cooling oil for each first oil flow-through channel.

## Description

### CROSS-REFERENCE TO THE RELATED APPLICATION

The present application claims priority to Chinese patent application No. 202311855445.3, filed before the China National Intellectual Property Administration (CNIPA) on December 28, 2023, the entire contents of which are incorporated herein by reference.

### TECHNICAL FIELD

The present disclosure relates to the field of battery technology, and in particular, to an oil cooling structure for a motor, a motor, an electric driving system and a vehicle.

### BACKGROUND

Driving motors in new energy vehicles generate a large amount of heat during operation. Currently, a common motor cooling method involves cooling the stator of the motor by means of cooling oil. Existing oil cooling structures can only cool the stator core, and it is difficult for the cooling oil to flow into the stator slots from end face openings of the stator slots. Even if part of the cooling oil flows into the stator slots, it can easily flow into a rotor mounting cavity at openings of the stator slots. As a result, end portions and portions located within the stator slots of the windings cannot be sufficiently cooled by the cooling oil, thereby affecting the overall cooling and heat dissipation performance of the motor.

### SUMMARY

To solve the above technical problems, embodiments of the present disclosure provide an oil cooling structure for a motor, a motor, an electric driving system and a vehicle.

In a first aspect, an embodiment of the present disclosure provides an oil cooling structure for a motor, including an accumulator ring assembly and a plurality of bushings disposed along an axial direction of the motor;

the plurality of bushings are disposed in stator slots of a stator core in one-to-one correspondence, each of the bushings is configured to receive windings in a corresponding stator slot and form a first oil passage groove;

the accumulator ring assembly is disposed coaxially with the motor, and configured to form an oil chamber for accommodating portions of the windings extending out of the stator slots, the accumulator ring assembly is provided with oil passage holes arranged in one-to-one correspondence with the stator slots, and the oil chamber is in communication with the first oil passage groove of each of the bushings via the oil passage holes.

Optionally, each of the bushings is formed with a supporting structure on an inner wall of the bushing, the supporting structure abuts against the windings, and the first oil passage groove is formed between the inner wall of the bushing and the windings.

Optionally, each of the bushings is provided with an accommodating cavity for receiving the windings, a part of the inner wall of the bushing protrudes toward the accommodating cavity to form the supporting structure. Along a circumferential direction of the stator core, a dimension of the accommodating cavity is greater than a dimension of the windings. Another part of the inner wall of the bushing is spaced apart from the windings to form the first oil passage groove.

Optionally, along the circumferential direction of the stator core, a cross-sectional area of the first oil passage groove gradually decreases from a side close to the windings to a side close to the inner wall of the bushing.

Optionally, a plurality of supporting structures are arranged along a circumferential direction of the bushing, and the first oil passage groove is formed between every two adjacent supporting structures.

Optionally, each of the supporting structures extends from one end to the other end of the bushing along the axial direction of the motor.

Optionally, a second oil passage groove is formed between an outer wall of each of the bushings and an inner wall of the stator slots.

Optionally, an end portion of each of the bushings is provided with a spigot portion, and the accumulator ring assembly is provided with a spigot groove that is in positioning fit with the spigot portion.

Optionally, the spigot groove is in clearance fit with the spigot portion.

Optionally, a third sealing structure is disposed between the spigot groove and the spigot portion.

Optionally, the spigot portion is in positioning fit with an axial end face of the stator core.

Optionally, the accumulator ring assembly includes a first accumulator ring and a second accumulator ring disposed coaxially; the first accumulator ring includes a first covering portion extending along an axial direction of the first accumulator ring and a second covering portion extending along a radial direction of the first accumulator ring; the second accumulator ring includes a third covering portion extending along an axial direction of the second accumulator ring and a fourth covering portion extending along a radial direction of the second accumulator ring;

the second covering portion and the fourth covering portion are disposed opposite to each other in the axial direction of the motor, and the first covering portion and the third covering portion are disposed opposite to each other in the radial direction of the motor;

the first covering portion, the second covering portion, the third covering portion and the fourth covering portion jointly enclose the oil chamber; the oil passage holes are circumferentially opened on the fourth covering portion.

Optionally, an inner diameter of the third covering portion matches an inner diameter of the stator core.

Optionally, the oil cooling structure further includes a first sealing structure and a second sealing structure disposed coaxially with the accumulator ring assembly, wherein the first sealing structure and the second sealing structure are arranged at a joint between the first covering portion and the fourth covering portion and at a joint between the second covering portion and the third covering portion, respectively.

Optionally, the first sealing structure includes a first sealing groove formed on an axial end face of the first covering portion or an axial end face of the fourth covering portion along the axial direction of the motor, and a first sealing ring is clamped in the first sealing groove;

the second sealing structure comprises a second sealing groove formed on an axial end face of the second covering portion or an axial end face of the third covering portion along the axial direction of the motor, and a second sealing ring is clamped in the second sealing groove.

In a second aspect, an embodiment of the present disclosure provides a motor including the above-mentioned oil cooling structure for a motor.

In a third aspect, an embodiment of the present disclosure provides an electric driving system including the above-mentioned oil cooling structure for a motor or the above-mentioned motor.

In a fourth aspect, an embodiment of the present disclosure provides a vehicle including the above-mentioned oil cooling structure for a motor, or the above-mentioned motor, or the above-mentioned electric driving system.

The technical solutions provided by the embodiments of the present disclosure have the following advantages compared with the related art:

In the oil cooling structure for a motor provided by the embodiments of the present disclosure, with the arrangement of the bushings, the first oil passage groove is formed in each stator slot for directional transmission of cooling oil. The bushing wraps the outer surface of the windings disposed in a corresponding stator slot to achieve the directional flow of the cooling oil. The windings in the stator slot can be directly cooled by circulating the cooling oil within the bushing, so as to improve the overall cooling efficiency of the motor. With the arrangement of the accumulator ring assembly, not only the oil chamber can be formed to cool the end portions of the windings extending out of the stator slots, but also cooling oil can be supplied to each first oil passage groove. In other words, the cooling oil in the oil chamber formed by the accumulator ring assembly is used to immerse and cool the end portions of the windings extending out of the stator slots, then flows through the oil passage hole into the first oil passage within the bushing. As the cooling oil flows from one end of the bushing to the other, it carries away heat from the surface of the windings, achieving cooling for both the end portions of the windings outside the stator slot and the portions thereof in the stator slot.

### BRIEF DESCRIPTION OF THE DRAWINGS

The accompanying drawings described below are incorporated into the specification and constitute a part of the specification, illustrate embodiments consistent with the present disclosure, and together with the specification serve to explain the principles of the present disclosure.

In order to describe technical solutions of the embodiments of the present disclosure or the related art more clearly, the accompanying drawings used in the illustration of the embodiments or the related art will be briefly introduced. Apparently, those skilled in the art may obtain other accompanying drawings based on these accompanying drawings without paying any creative effort.
FIG. 1 is a cross-sectional view of a motor according to an embodiment of the present disclosure;
FIG. 2 is a schematic structural diagram of a motor according to an embodiment of the present disclosure;
FIG. 3 is a schematic structural diagram of a first accumulator ring in an oil cooling structure for a motor according to an embodiment of the present disclosure;
FIG. 4 is a schematic structural diagram of a second accumulator ring in the oil cooling structure for a motor according to an embodiment of the present disclosure;
FIG. 5 is a cross-sectional view of an oil cooling structure for a motor according to an embodiment of the present disclosure;
FIG. 6 is a cross-sectional view of a connection part between a stator core and bushings in the oil cooling structure for a motor according to an embodiment of the present disclosure;
FIG. 7 is a structural schematic diagram of a connection between bushings and a second accumulator ring in the oil cooling structure for a motor according to an embodiment of the present disclosure;
FIG. 8 is a schematic structural diagram of a connection part between a spigot portion of a bushing and a second accumulator ring in the motor oil cooling structure according to an embodiment of the present disclosure; and
FIG. 9 is a schematic structural diagram of a bushing in the oil cooling structure according to an embodiment of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and shall not be construed as being limited to the embodiments set forth herein. On the contrary, these embodiments are provided to enable a thorough and comprehensive understanding of the present disclosure. It should be understood that the accompanying drawings and embodiments of the present disclosure are only for illustrative purposes, and are not intended to limit the protection scope of the present disclosure.

As used herein, the term "including" and variations thereof are open-ended, meaning "including but not limited to". The term "based on" means "based at least in part on". The term "one embodiment" means "at least one embodiment"; the term "another embodiment" means "at least one additional embodiment"; and the term "some embodiments" means "at least some embodiments". Definitions of other relevant terms will be provided in the following description. It should be noted that the terms "first", "second" and the like mentioned in the present disclosure are only used to distinguish different devices, modules or units, and are not intended to limit the execution sequence or interdependence of the functions performed by such devices, modules or units.

It should be noted that the modifiers "one" and "a plurality of" used in the present disclosure are illustrative and non-restrictive. Those skilled in the art shall understand that, unless otherwise clearly specified in the context, such modifiers shall be interpreted as "one or more".

Driving motors in new energy vehicles generate a large amount of heat during operation. Currently, a common motor cooling method involves cooling the stator of the motor by means of cooling oil. Existing oil cooling structures can only cool the stator core, and it is difficult for the cooling oil to flow into the stator slots from end face openings of the stator slots. Even if part of the cooling oil flows into the stator slots, it can easily flow into a rotor mounting cavity at openings of the stator slots. As a result, end portions and portions located within the stator slots of the windings cannot be sufficiently cooled by the cooling oil, thereby affecting the overall cooling and heat dissipation performance of the motor.

In view of the above, an embodiment of the present disclosure provides an oil cooling structure for a motor, a motor, an electric driving system and a vehicle. With the arrangement of the bushings, the first oil passage groove is formed in each stator slot for directional transmission of cooling oil. The bushing wraps the outer surface of the windings disposed in a corresponding stator slot to achieve the directional flow of the cooling oil. The windings in the stator slot can be directly cooled by circulating the cooling oil within the bushing, so as to improve the overall cooling efficiency of the motor. With the arrangement of the accumulator ring assembly, not only the oil chamber can be formed to cool the end portions of the windings extending out of the stator slots, but also cooling oil can be supplied to each first oil passage groove. In other words, the cooling oil in the oil chamber formed by the accumulator ring assembly is used to immerse and cool the end portions of the windings extending out of the stator slots, then flows through the oil passage hole into the first oil passage within the bushing. As the cooling oil flows from one end of the bushing to the other, it carries away heat from the surface of the windings, achieving cooling for both the end portions of the windings outside the stator slot and the portions thereof in the stator slot. Detailed descriptions will be given below through specific embodiments.

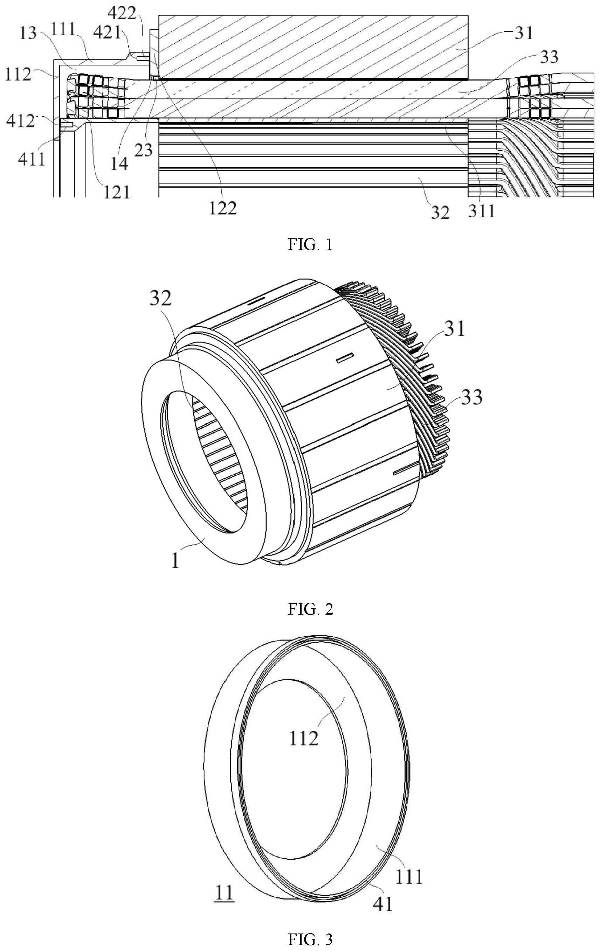

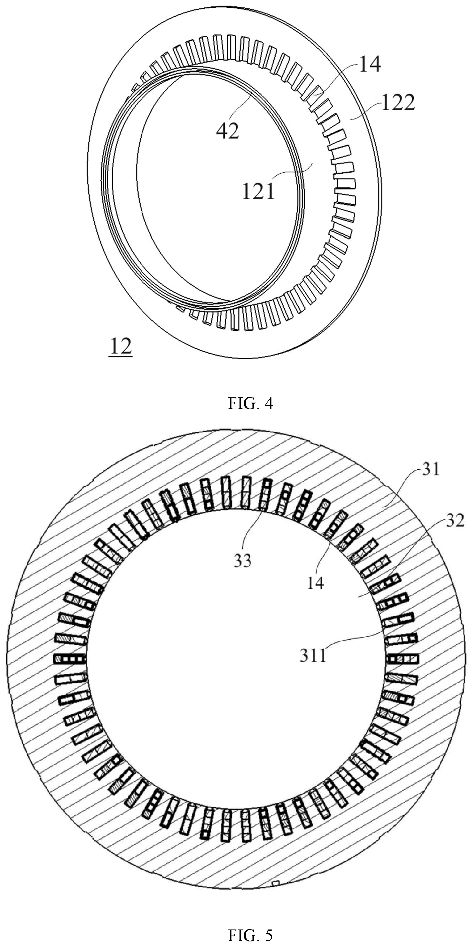

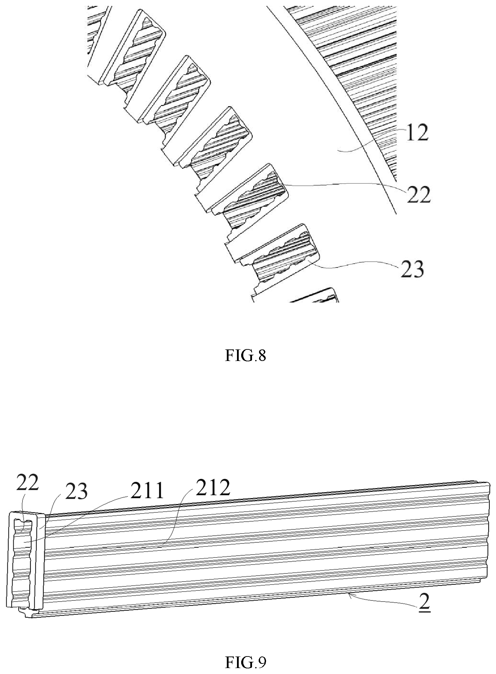

As shown in FIG. 1 to FIG. 9, the present embodiment provides an oil cooling structure for a motor, including an accumulator ring assembly 1 and a plurality of bushings 2 disposed along an axial direction of the motor. The bushings 2 are disposed in stator slots 311 formed in a stator core 31 in an one-to-one correspondence manner. Each bushing 2 is configured to accommodate windings 33 in a corresponding stator slot 311 and form a first oil passage groove 211. The accumulator ring assembly 1 is coaxially arranged with the motor, and configured to form an oil chamber 13 for accommodating portions of the windings 33 extending out of the stator slots 311. The accumulator ring assembly 1 is provided with oil passage holes 14 arranged in one-to-one correspondence with the stator slots 311. The oil chamber 13 is in communication with the first oil passage grooves 211 through the oil passage holes 14.

In the oil cooling structure provided by the present embodiment, the bushings 2 are arranged in a manner that the first oil passage groove 211 is formed in each stator slot 311 for directional transmission of cooling oil. The bushing 2 wraps the outer surface of the windings 33 disposed in a corresponding stator slot 311 to achieve the directional flow of the cooling oil. The windings 33 in the stator slot 311 can be directly cooled by circulating the cooling oil within the bushing 2, so as to improve the overall cooling efficiency of the motor. With the arrangement of the accumulator ring assembly 1, not only the oil chamber 13 can be formed to cool the end portions of the windings 33 extending out of the stator slots 311, but also cooling oil can be supplied to each first oil passage groove 211. In other words, the cooling oil in the oil chamber 13 formed by the accumulator ring assembly 1 is used to immerse and cool the end portions of the winding 33 extending out of the stator slot 311, then flows through the oil passage hole 14 into the first oil passage 211 inside the bushing 2. As the cooling oil flows from one end of the bushing 2 to the other, it carries away heat from the surface of the windings 33, achieving cooling for both the end portions of the windings 33 outside the stator slot 311 and the portions thereof in the stator slot 311.

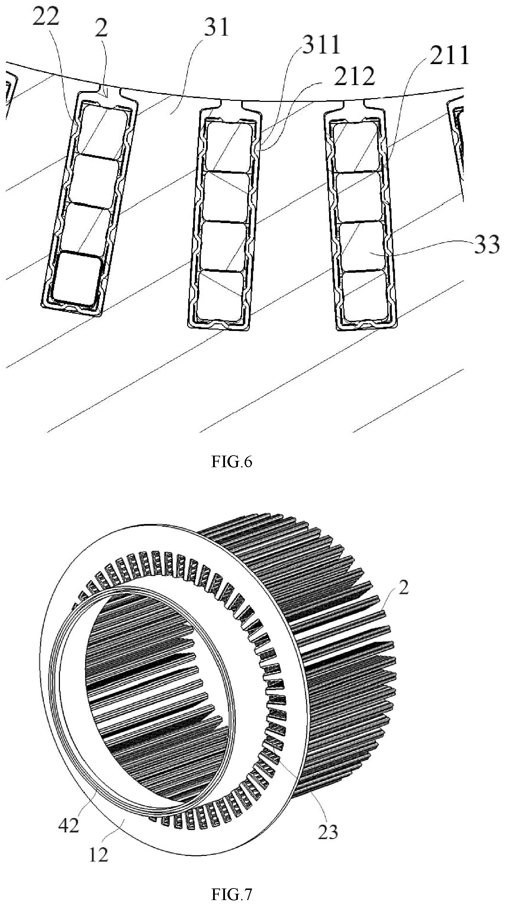

Furthermore, with reference to FIG. 6, FIG. 8 and FIG. 9, a supporting structure 22 is formed on the inner wall of each bushing 2. The supporting structure 22 abuts against the windings 33 to form the first oil passage groove 211 between the inner wall of the bushing 2 and the windings 33. With the arrangement of the supporting structure 22, the windings 33 can be supported and the overall stability and NVH (Noise, Vibration and Harshness) performance of the motor can be improved.

In some embodiments, each bushing 2 is provided with an accommodating cavity for receiving the windings 33. A part of the inner wall of the bushing 2 protrudes toward the accommodating cavity to form the supporting structure 22. Along the circumferential direction of the stator core 31, the size of the accommodating cavity is greater than that of the windings 33. Another part of the inner wall of the bushing 2 is spaced from the windings 33 to form the first oil passage groove 211. On the one hand, the supporting structure 22 formed by the protruding part of the inner wall of the bushing 2 abuts against the windings 33 to support the windings 33, thereby improving the overall stability and NVH performance of the motor. On the other hand, the supporting structure 22 utilizes its own protrusion to form the first oil passage groove 211, ensuring the unobstructed flow of the first oil passage groove 211.

Specifically, the supporting structure 22 enable the formation of an oil passage gap between the outer surface of the windings 33 and the bushing 2, that is, the bushing 2 is in clearance fit with the windings 33. The supporting structure 22 on the inner wall of the bushing 2 can fill part of the gap to support the windings 33, while leaving part of the gap to form the first oil passage groove 211, ensuring the circulation of cooling oil. When the bushing 2 is made of metal materials, the supporting structure 22 may be formed by stamping, or may be fixed to the inner wall of the bushing 2 by welding or other mounting methods.

In some embodiments, along the circumferential direction of the stator core 31, the cross-sectional area of each first oil passage groove 211 gradually decreases from the side close to the windings 33 to the side close to the inner wall of the bushing 2. This arrangement can improve the cooling effect of the cooling oil on the windings 33.

Specifically, from the position where the windings 33 are located toward the inner wall of the bushing 2 spaced apart from the windings 33, the cross-sectional area of the first oil passage groove 211 decreases progressively.

In some embodiments, a plurality of supporting structures 22 are arranged along the circumferential direction of each bushing 2, and a first oil passage groove 211 is formed between every two adjacent supporting structures 22. In other words, the supporting structures 22 are spaced apart in the circumferential direction to form a plurality of first oil passage grooves 211, thereby increasing the contact area between the cooling oil and the windings 33, achieving more uniform surface cooling of the windings 33, and avoiding local overheating of the windings 33.

In a further embodiment, the supporting structures 22 extend from one end to the other end of the bushing 2 along the axial direction of the motor. That is, the supporting structures 22 are strip-shaped and extend in a direction same as the windings 33. Accordingly, such supporting structures 22 form first oil passage grooves 211 extending in the direction same as that of the supporting structures, thereby increasing the flow speed of the cooling oil in the first oil passage groove 211 and further improving the cooling efficiency of the windings 33.

With further reference to FIG. 6, a second oil passage groove 212 is formed between the outer wall of the bushing 2 and the inner wall of the stator slot 311. When the supporting structure 22 is formed by stamping, the outer wall of the bushing 2 is recessed toward the windings 33 at the position of the supporting structure 22, thereby forming the second oil passage groove 212. The arrangement of the second oil passage groove 212 enables cooling of the bushing 2 itself and the stator slot 311, so as to indirectly cool the windings 33 and further improve the cooling efficiency of the motor.

Furthermore, with reference to FIG. 1, FIG. 8 and FIG. 9, each bushing 2 is provided with a spigot portion 23 at an end portion thereof. The accumulator ring assembly 1 is provided with a spigot groove that is in positioning fit with the spigot portion 23. By providing the spigot portion 23 and the spigot groove, positioning of the accumulator ring assembly 1 and the bushing 2 can be realized, and the axial and radial positions of the bushing 2 in the stator slot 311 can be determined. The spigot portion 23 may be an annular structure protruding outward at the end of the bushing 2, having a certain thickness in an extending direction of the bushing 2 and capable of withstanding radial forces and axial forces within a certain range, thereby ensuring that the bushing 2 can form a reliable and stable connection with the accumulator ring assembly 1 via the spigot portion 23.

In some embodiments, the spigot groove is in clearance fit with the spigot portion 23. This facilitates mounting of the accumulator ring assembly 1 and the bushing 2 onto the stator core 31, and mitigates the influence of manufacturing errors.

In some embodiments, a third sealing structure is arranged between the spigot groove and the spigot portion 23. The third sealing structure may be an annular sealing structure matched with the gap shape between the spigot portion 23 and the spigot groove. After the spigot portion 23 is clamped into the spigot groove, the third sealing structure is compressed to seal the gap therebetween. By providing the third sealing structure, it can be ensured that the cooling oil smoothly flows from the oil chamber 13 into the bushing 2, preventing the cooling oil from permeating to the surface of the stator core 31 through a joint gap between the spigot groove and the spigot portion 23, which would otherwise impair the cooling efficiency.

In some embodiments, the spigot portion 23 is in positioning fit with an axial end face of the stator core 31. That is, the spigot portion 23 can be utilized to prevent the bushing 2 from being jammed in the stator slot 311, and can also facilitate rapid installation of the bushing 2 in place.

In some embodiments, the accumulator ring assembly 1 includes a first accumulator ring 11 and a second accumulator ring 12 disposed coaxially. The first accumulator ring 11 includes a first covering portion 111 extending along the axial direction thereof and a second covering portion 112 extending along the radial direction thereof; the first covering portion 111 and the second covering portion 112 may be integrally formed or fixedly connected. The second accumulator ring 12 includes a third covering portion 121 extending along the axial direction thereof and a fourth covering portion 122 extending along the radial direction thereof; the third covering portion 121 and the fourth covering portion 122 may be integrally formed or fixedly connected. Along the axial direction of the motor, the second covering portion 112 and the fourth covering portion 122 are disposed opposite to each other; along the radial direction of the motor, the first covering portion 111 and the third covering portion 121 are disposed opposite to each other. The first covering portion 111, the second covering portion 112, the third covering portion 121 and the fourth covering portion 122 jointly enclose to form the oil chamber 13. The oil passage holes 14 are circumferentially opened on the fourth covering portion 122. In some other embodiments, the first covering portion 111 and the third covering portion 121 may both be connected to the second covering portion 112 to form the first accumulator ring 11; or the first covering portion 111 and the third covering portion 121 may both be connected to the fourth covering portion 122 to form the second accumulator ring 12; or the first covering portion 111 may be connected to the fourth covering portion 122 to form the second accumulator ring 12, and the third covering portion 121 may be connected to the second covering portion 112 to form the first accumulator ring 11. Any arrangement is acceptable as long as such arrangement facilitates axial compression of the first accumulator ring 11 and the second accumulator ring 12 to form a sealed oil chamber 13.

Furthermore, with reference to FIG. 1, the inner diameter of the third covering portion 121 matches the inner diameter of the stator core 31. That is, the accumulator ring assembly 1 does not interfere with a rotor mounting cavity 32 in the axial direction, so that the accumulator ring assembly 1 does not affect the normal installation of the stator core 31 and a rotor.

Furthermore, with reference to FIG. 1, FIG. 3, FIG. 4 and FIG. 7, the oil cooling structure for the motor further includes a first sealing structure 41 and a second sealing structure 42 disposed coaxially with the accumulator ring assembly 1. The first sealing structure 41 and the second sealing structure 42 are correspondingly disposed at the joint between the first covering portion 111 and the fourth covering portion 122, and at the joint between the second covering portion 112 and the third covering portion 121, respectively. By providing the first sealing structure 41 and the second sealing structure 42, the sealing performance of the accumulator ring assembly 1 can be improved, in particular the tightness of the oil chamber 13 formed by assembling the first accumulator ring 11 and the second accumulator ring 12 can be improved, ensuring that the cooling oil can smoothly enter into the first oil passage groove 211 of the bushing 2.

In a further embodiment, the first sealing structure 41 includes a first sealing groove 411 formed on the axial end face of the first covering portion 111 or the fourth covering portion 122 along the axial direction of the motor, and a first sealing ring 412 is clamped in the first sealing groove 411. The second sealing structure 42 includes a second sealing groove 421 formed on the axial end face of the second covering portion 112 or the third covering portion 121 along the axial direction of the motor, and a second sealing ring 422 is clamped in the second sealing groove 421. Such a configuration ensures that when the first accumulator ring 11 is axially pressed toward the second accumulator ring 12, the first sealing ring 412 and the second sealing ring 422 are subjected to a pressing force in the same direction, which is parallel to the opening direction of the first sealing groove 411 and the second sealing groove 421. Thereby, the joint between the first accumulator ring 11 and the second accumulator ring 12 achieves tighter and more stable sealing.

In a second aspect, embodiments of the present disclosure provide a motor, including the oil cooling structure described above.

The specific implementation manner and working principle are the same as those of the foregoing embodiments, and the same or similar technical effects can be achieved, which will not be repeated herein. Reference may be made to the foregoing description of the embodiment of the oil cooling structure for the motor.

It should be noted that relational terms such as "first" and "second" used herein are merely used to distinguish one entity or operation from another, and do not necessarily require or imply any actual relationship or order between such entities or operations. Furthermore, the terms "comprise", "include" and any variations thereof are intended to cover non-exclusive inclusion, such that a process, method, article or apparatus that comprises a series of elements includes not only those elements explicitly listed but also other elements not expressly listed or inherent to such process, method, article or apparatus. Without further limitation, an element defined by the phrase "comprising one ..." does not exclude the presence of additional identical elements in the process, method, article or apparatus.

The above are merely specific embodiments of the present disclosure, enabling those skilled in the art to understand or implement the present disclosure. Various modifications to these embodiments will be readily apparent to those skilled in the art, and the general principles defined herein may be applied to other embodiments without departing from the spirit or scope of the present disclosure. Accordingly, the present disclosure is not intended to be limited to the embodiments described herein, but is to be accorded the widest scope consistent with the principles and novel features disclosed herein.

## Claims

1. An oil cooling structure for a motor, comprising an accumulator ring assembly and a plurality of bushings disposed along an axial direction of the motor;
wherein the plurality of bushings are disposed in stator slots of a stator core in one-to-one correspondence, each of the bushings is configured to receive windings in a corresponding stator slot and form a first oil passage groove;
the accumulator ring assembly is disposed coaxially with the motor, and configured to form an oil chamber for accommodating portions of the windings extending out of the stator slots, the accumulator ring assembly is provided with oil passage holes arranged in one-to-one correspondence with the stator slots, and the oil chamber is in communication with the first oil passage groove of each of the bushings via the oil passage holes.

2. The oil cooling structure according to claim 1, wherein each of the bushings is formed with a supporting structure on an inner wall of the bushing, the supporting structure abuts against the windings, and the first oil passage groove is formed between the inner wall of the bushing and the windings.

3. The oil cooling structure according to claim 2, wherein each of the bushings is provided with an accommodating cavity for receiving the windings, a part of the inner wall of the bushing protrudes toward the accommodating cavity to form the supporting structure, along a circumferential direction of the stator core, a dimension of the accommodating cavity being greater than a dimension of the windings, and another part of the inner wall of the bushing is spaced apart from the windings to form the first oil passage groove.

4. The oil cooling structure according to claim 3, wherein along the circumferential direction of the stator core, a cross-sectional area of the first oil passage groove gradually decreases from a side close to the windings to a side close to the inner wall of the bushing.

5. The oil cooling structure according to any one of claims 2 to 4, wherein a plurality of supporting structures are arranged along a circumferential direction of the bushing, and the first oil passage groove is formed between every two adjacent supporting structures.

6. The oil cooling structure according to any one of claims 2 to 5, wherein each of the supporting structures extends from one end to the other end of the bushing along the axial direction of the motor.

7. The oil cooling structure according to any one of claims 1 to 6, wherein a second oil passage groove is formed between an outer wall of each of the bushings and an inner wall of each of the stator slots.

8. The oil cooling structure according to any one of claims 1 to 7, wherein an end portion of each of the bushings is provided with a spigot portion, and the accumulator ring assembly is provided with a spigot groove that is in positioning fit with the spigot portion.

9. The oil cooling structure according to claim 8, wherein the spigot groove is in clearance fit with the spigot portion.

10. The oil cooling structure according to claim 8 or 9, wherein a third sealing structure is disposed between the spigot groove and the spigot portion.

11. The oil cooling structure according to any one of claims 8 to 10, wherein the spigot portion is in positioning fit with an axial end face of the stator core.

12. The oil cooling structure according to any one of claims 1 to 11, wherein the accumulator ring assembly comprises a first accumulator ring and a second accumulator ring disposed coaxially; the first accumulator ring comprises a first covering portion extending along an axial direction of the first accumulator ring and a second covering portion extending along a radial direction of the first accumulator ring; the second accumulator ring comprises a third covering portion extending along an axial direction of the second accumulator ring and a fourth covering portion extending along a radial direction of the second accumulator ring;
wherein the second covering portion and the fourth covering portion are disposed opposite to each other in the axial direction of the motor, and the first covering portion and the third covering portion are disposed opposite to each other in the radial direction of the motor;
wherein the first covering portion, the second covering portion, the third covering portion and the fourth covering portion jointly enclose the oil chamber; wherein the oil passage holes are circumferentially opened on the fourth covering portion.

13. The oil cooling structure according to claim 12, wherein an inner diameter of the third covering portion matches an inner diameter of the stator core.

14. The oil cooling structure according to claim 12 or 13, further comprising a first sealing structure and a second sealing structure disposed coaxially with the accumulator ring assembly, wherein the first sealing structure and the second sealing structure are arranged at a joint between the first covering portion and the fourth covering portion and at a joint between the second covering portion and the third covering portion, respectively.

15. The oil cooling structure according to any one of claims 12 to 14, wherein the first sealing structure comprises a first sealing groove formed on an axial end face of the first covering portion or an axial end face of the fourth covering portion along the axial direction of the motor, and a first sealing ring is clamped in the first sealing groove;
the second sealing structure comprises a second sealing groove formed on an axial end face of the second covering portion or an axial end face of the third covering portion along the axial direction of the motor, and a second sealing ring is clamped in the second sealing groove.

16. A motor, comprising the oil cooling structure for the motor according to any one of claims 1 to 15.

17. An electric driving system, comprising the oil cooling structure for a motor according to any one of claims 1 to 15, or the motor according to claim 16.

18. A vehicle, comprising the oil cooling structure for a motor according to any one of claims 1 to 15, or the motor according to claim 16, or the electric driving system according to claim 17.
